# EUROPÄISCHE PATENTSCHRIFT

(11) **EP 1 643 229 B1**
(45) Veröffentlichungstag und Bekanntmachung des Hinweises auf die Patenterteilung: **21.05.2008**
(21) Anmeldenummer: 05020521.0
(22) Anmeldetag: 20.09.2005
(51) Int. Cl.: G01M 3/16, G01M 3/40

(54) **Vorrichtung und Verfahren zum Überwachen einer Feuchtigkeitssperre**
Device and procedure for monitoring a humidity barrier
Dispositif et procédé de surveillance d'une barrière d'humidité

(30) Priorität: 01.10.2004 DE 202004015410 U
(43) Veröffentlichungstag der Anmeldung: 05.04.2006
(73) Patentinhaber: Texplor Exploration & Environmental Technology GmbH, 14482 Potsdam (DE); Geutebrück, Ernst, Dr., 1220 Wien (AT)
(72) Erfinder: Geutebrück, Ernst, 1210 Wien (AT)
(74) Vertreter: Bittner, Thomas L.

(56) Entgegenhaltungen:
- EP-A- 0 942 274
- EP-A- 1 387 156
- US-A- 4 835 521
- US-A- 4 947 470
- US-A- 5 541 575
- PATENT ABSTRACTS OF JAPAN Bd. 006, Nr. 104 (P-122), 15. Juni 1982 (1982-06-15) & JP 57 037241 A (TAISEI DENSO KK), 1. März 1982 (1982-03-01)

## Beschreibung

Die Erfindung bezieht sich auf eine Vorrichtung und ein Verfahren zum Überwachen einer Feuchtigkeitssperre, insbesondere einer linien- oder einer flächenhaften Feuchtigkeitssperre, mit einer im Umfeld der Feuchtigkeitssperre gebildeten und mindestens eine Elektroden umfaßenden Elektrodenanordnung zum Ausbilden eines elektrischen Feldes im Umfeld der Feuchtigkeitssperre.

### Hintergrund der Erfindung

Eine solche Vorrichtung ist aus dem Dokument EP 1 387 156 A1 bekannt. Sie dient zum Feststellen von Leckagen, wie sie beispielsweise im Tief- oder Hochbau sowie im Kanalbereich oder bei der Lecksuche bei Dächern, Dichtungswänden, Erdtanks, Grundbauwerken, medienführenden Unterwasserleitungen oder dergleichen auftreten können. Bei der bekannten Vorrichtung handelt es sich um ein mobiles Meßsystem, bei dem mindestens je eine Einspeiselektrode und eine Gegenelektrode zum Erzeugen eines stationären elektrostatischen Feldes im Umfeld der zu untersuchenden Feuchtigkeitssperre angeordnet werden. Mit Hilfe eines mobilen Meßaufnehmers, welcher mit der Gegenelektrode verbunden ist, werden Anomalien der Feldlinien des mit Hilfe der Einspeiselektrode und der Gegenelektrode erzeugten stationären Feldes gemessen, die ihrerseits auf undichte Stellen der zu untersuchenden Feuchtigkeitssperre hinweisen. Zur Ausführung der Messung wird der mobile Meßaufnehmer in dem elektrostatischen Feld hin und her bewegt.

Alternativ werden mehrere Meßaufnehmer kurzfristig montiert und die Leckageverhältnisse über einen Zeitraum aufgezeichnet und per Monitoring anzugezeigt.

Es hat sich nun gezeigt, daß ein solches mobiles Meßsystem bezüglich der Handhabung nicht für Anwendungen geeignet ist, bei denen eine dauerhafte Überwachung einer zur Abdichtung genutzten Feuchtigkeitssperre gewünscht wird.

Das Dokument PATENT ABSTRACTS OF JAPAN Bd. 006, Nr. 104 (P-122), 15. Juni 1982 (1982-06-15) & JP 57 037241 A (TAISEI DENSKO KK), 1. März 1982 (1982-03-01) beschreibt eine Vorrichtung für die Leckageinspektion, bei dem ein Sensor mit einer elektronischen Schaltung verbunden ist, welche einen Vergleicher umfaßt.

Das Dokument US-A-4 947 470 beschreibt eine Vorrichtung zur Feststellung von Leckagen in Abdichtungsschichten. Hierzu werden Detektoren zum Erfassen elektrischer oder magnetischer Felder in einem Zwischenbereich zwischen zwei Abdichtungsschichten angeordnet. Um eine Leckage feststellen zu können, muß hierbei ein Stromfluß durch die Abdichtungsschichten fließen. Das bedeutet, es müssen stromliefernde Elektroden vorgesehen sein, zwischen denen aufgrund der Leckage in den Abdichtungsschichten ein Strompfad erzeugt wird.

Das Dokument US-A-4 835 521 beschreibt eine Anordnung von Proben in und um Benzinvorratsbehältern einer Tankstelle. Die Proben umfassen Flüssigkeitsstandsensoren, Wassersensoren, Dampfsensoren, Temperatursensoren etc.

Das Dokument EP-A-0 942 274 beschreibt ein Verfahren zum Messen von unterirdischen Umgebungskonditionen mittels entlang von Pipeline-Rohren angeordneten Sensoren. Die Sensoren dienen zur Messung von Schall, Strahlung, Wärme etc.

Das Dokument US-A-5 541 575 beschreibt ein Leckage - Erkennungssystem mit einer Mehrzahl örtlich verteilter integrierten Einrichtungen, die Leckagesensoren, Vorverarbeitungs- und Auswerteinrichtungen enthalten.

### Aufgabe der Erfindung

Aufgabe der Erfindung ist es, eine Vorrichtung und ein Verfahren zum Überwachen einer Feuchtigkeitssperre, insbesondere einer linien- oder einer flächenhaften Feuchtigkeitssperre, anzugeben, die für die fortdauernde Überwachung der Dichtheit der Feuchtigkeitssperre geeignet sind, wobei der Aufwand zur Installation der Vorrichtung vermindert sein soll.

### Zusammenfassung der Erfindung

Diese Aufgabe wird erfindungsgemäß durch eine Vorrichtung zum Überwachen einer Feuchtigkeitssperre mit den Merkmalen des unabhängigen Anspruchs 1 sowie ein Verfahren zum Überwachen einer Feuchtigkeitssperre mit den Merkmalen des unabhängigen Anspruchs 25 gelöst. Vorteilhafte Ausgestaltungen der Erfindung sind Gegenstand von abhängigen Unteransprüchen.

Der Erfindung liegt der bekannte Gedanke zu Grunde, zum Überwachen einer Feuchtigkeitssperre eine Vorrichtung mit einer im Umfeld der Feuchtigkeitssperre gebildeten und mindestens eine Elektrode umfaßenden Elektrodenanordnung zum Ausbilden eines elektrischen Testfeldes im Umfeld der Feuchtigkeitssperre vorzusehen, wobei im Bereich eines elektrischen Feldes im Umfeld der Feuchtigkeitssperre ein Meßwerte für zumindest eine elektrische Kenngröße für Feldlinien des elektrischen Feldes erfassender Sensor ortsfest angeordnet ist und wobei der mindestens eine Sensor mit einer Auswerteeinrichtung verbunden ist, in welcher Normalwerte für die elektrische Kenngröße für die Feldlinien gespeichert sind und die ausgebildet ist, um von dem mindestens einen Sensor empfangene, aktuelle Meßwerte der elektrischen Kenngröße für die Feldlinien mit den Normalwerten für die elektrische Kenngröße für die Feldlinien zu vergleichen und ein Alarmsignal zu erzeugen, wenn aufgrund einer Fehlstelle in der Feuchtigkeitssperre die aktuellen Meßwerte der elektrischen Kenngröße für die Feldlinien von Normalwerten der elektrischen Kenngröße für die Feldlinien abweichen.

Erfindungsgemäß sind die mindestens eine Elektrode der Elektrodenanordnung und der mindestens eine Sensor als integriertes Sensor-Elektroden-Element ausgeführt. Auf diese Art und Weise wird der Aufwand zur Installation der Elektroden und der Sensoren vermindert.

Die Ausbildung des elektrischen Testfeldes im Umfeld der Feuchtigkeitssperre bedeutet, daß es auf einer oder auf beiden Seiten der Feuchtigkeitssperre gebildet ist, nämlich außerhalb und / oder innerhalb der Feuchtigkeitssperre. Als elektrische Kenngrößen können elektrische Widerstände, elektrische Leitfähigkeit, elektrische Spannung erfaßt werden, aus denen die Feldlinien ableitbar sind.

Es wird also mindestens ein Sensor im Umfeld der zu prüfenden Feuchtigkeitssperre ortsfest angeordnet, so daß fortdauernd, das heißt dauerhaft oder aufeinander folgend in bestimmten Zeitabständen ein elektrisches Feld im Umfeld der Feuchtigkeitssperre abgetastet werden kann. Das abgetastete elektrische Feld setzt sich aus Feldkomponenten zusammen, die gegebenenfalls durch die natürliche Umgebung der Feuchtigkeitssperre hervorgerufen werden und / oder durch das elektrische Testfeld verursacht sind, welches mit Hilfe der einen oder aller Elektroden künstlich eingespeist wird.

Zur Abtastung des Feldes ist es im Vergleich zum Stand der Technik nicht notwendig, einen mobilen Meßaufnehmer bei der Ausführung der Messungen im Umfeld der Feuchtigkeitssperre zu bewegen. Wahlweise sind mehreren Sensoren über einen Bereich im Umfeld der flächigen Feuchtigkeitssperre verteilt, so daß interessierende Bereiche der Feuchtigkeitssperre von der Messung erfaßt sind. Die gemessenen aktuellen Meßwerte für den Feldlinienverlauf werden in der Auswerteeinrichtung mit Normalwerten des elektrischen Feldes verglichen. Falls bei diesem Vergleich eine Abweichung zwischen den aktuellen Meßwerten und den Normalwerten festgestellt wird, gibt die Auswerteeinrichtung ein Alarmsignal ab. Eine solche Abweichung, die im Vergleich zu den Normalwerten eine Feldlinienanomalie darstellt, deutet auf eine Fehlstelle in der Feuchtigkeitssperre hin. Da die Position des mindestens einen Sensors bekannt ist, kann die Fehlstelle örtlich lokalisiert werden.

Die Vorrichtung und das Verfahren können zur Überwachung sehr unterschiedlicher Feuchtigkeitssperren angepaßt werden, insbesondere indem zum Beispiel in Gebäuden eine ortsfeste Verteilung der Sensoren und die Positionierung der Elektrodenanordnung den örtlichen Bedingungen entsprechend gewählt wird, so daß die interessierenden Bereiche der Feuchtigkeitssperre beobachtet und ausgewertet werden können. Ein wesentlicher Vorteil besteht weiterhin darin, daß auch ein nachträglicher Einbau der Vorrichtung zur Überwachung von Feuchtigkeitssperren möglich ist.

Eine zweckmäßige Ausgestaltung der Erfindung sieht vor, daß eine oder mehrere Einspeiseelektroden auf einer Seite der Feuchtigkeitssperre und eine oder mehrere Gegenelektroden auf einer anderen Seite der Feuchtigkeitssperre angeordnet sind, wodurch eine optimale Abdekkung der Feuchtigkeitssperre mit dem erzeugten elektrischen Testfeld erreicht wird.

Zweckmäßig sind bei einer Fortbildung der Erfindung eine oder alle Einspeiseelektroden auf einer Feuchteangriffsseite der Feuchtigkeitssperre angeordnet. Hierdurch wird die elektrische Leitfähigkeit des Mediums genutzt, welches für einen Feuchteangriff verantwortlich zeichnet, insbesondere das Grundwasser, um eine optimierte Ausbildung des elektrischen Testfeldes zu erreichen.

Der Einbauaufwand für die Vorrichtung, egal ob dieser beim Errichten des Bauwerks oder nachträglich erfolgt, wird bei einer zweckmäßigen Ausführungsform der Erfindung dadurch möglichst gering gehalten, daß der mindestens eine Sensor über eine kabellose Verbindung an die zentrale Auswerteeinheit zur Datenfernübertragung der aktuellen Meßwerte der elektrischen Kenngröße für die Feldlinien gekoppelt sind. Bei dieser Ausführungsform ist es nicht notwendig, Kabelschächte oder Kabelkanäle für die Kabelanbindung der Sensoren an die Auswerteeinheit herzustellen.

Eine vorteilhafte Weiterbildung der Erfindung kann vorsehen, daß die Auswerteeinheit mit einer Aktualisierungsfunktion ausgebildet ist, um die Normalwerte der elektrischen Kenngröße für die Feldlinien in vorgegebenen Zeitabständen zu aktualisieren. Auf diese Weise wird sichergestellt, daß die für die Feldlinien gemessenen, aktuellen Meßwerte beim Vergleich mit den Normalwerten stets mit Normalwerten verglichen werden, die den Feldlinien entsprechen, die sich auf Grund aktueller Bedingungen im Umfeld der flächigen Feuchtigkeitssperre ergeben. So kann es beispielsweise vorkommen, daß nach der Installation der Vorrichtung zur Überwachung der Feuchtigkeitssperre am Bauwerk oder in dessen Umgebung Veränderungen vorgenommen werden, die sich auf den Verlauf der Feldlinien des zur Dichteprüfung genutzten elektrischen Feldes auswirken. Eine solche Änderung des Feldlinienverlaufes ist jedoch nicht durch eine Fehlstelle in der Feuchtigkeitssperre bedingt, sondern entsteht wegen der baulichen Änderung, welche mittels Aktualisierung der Normalwerte für die Feldlinien für folgende Messungen dann berücksichtigt wird. Es kann auch vorgesehen sein, daß die zum Vergleich mit den aktuellen Meßwerten herangezogenen Normalwerte der elektrischen Kenngröße für die Feldlinien dadurch aktualisiert werden, daß vorhandene Normalwerte mit dem Ergebnis einer weiteren Messung der elektrischen Kenngröße gewichtet gemittelt wird. Mit Hilfe einer solchen Mittelung wird der Einfluß von Meßungenauigkeiten verringert. Ein Mittelungsprozeß kann unabhängig von der Aktualisierung der Normalwerte auch bei der erstmaligen Erfassung der Normalwerte vorgesehen sein.

Eine bevorzugte Ausgestaltung der Erfindung sieht vor, daß der mindestens eine Sensor und die Auswerteeinrichtung zur Datenübertragung an ein Haustechniknetz des Bauwerks angeschlossen sind. Auch diese Fortbildung der Erfindung hat den Vorteil, daß der Installationsaufwand für die Vorrichtung zur Überwachung der Feuchtigkeitssperre möglichst gering gehalten wird.

Es kann vorgesehen sein, daß die mindestens eine Elektrode der Elektrodenanordnung und /oder der mindestens eine Sensor im Erdreich oder in einem Mauerwerk eines Bauwerks angeordnet sind. Die verschiedenen Ausführungsformen ermöglichen eine optimale Anpassung der Vorrichtung zur Überwachung an die baulichen und örtlichen Gegebenheiten im jeweiligen Anwendungsfall. Es kann auch vorgesehen sein, daß eine oder alle Elektroden der Elektrodenanordnung und / oder ein oder alle Sensoren in einem Behältnis oder einer Wanne angeordnet sind. Diese Ausführungsformen ermöglicht eine Dichtheitskontrolle beliebiger Flüssigkeitsbehältnisse.

Bevorzugt ist die Auswerteeinrichtung mit Hilfe eines oder mehrerer Datenlogger ausgeführt, die jeweils mit einem oder mehreren der Sensoren verbunden sind. Derartige Datenlogger dienen zum Erfassen und zur wahlweisen Verarbeitung der erfaßten Meßwerte.

Die Ankopplung der Vorrichtung zur Überwachung der Feuchtigkeitssperre an ein übergeordnetes Überwachungs- oder Kontrollsystem ist bei einer Ausgestaltung der Erfindung dadurch ermöglicht, daß die Auswerteeinrichtung eine Sendeeinheit aufweist, um das Alarmsignal an eine Meldeeinrichtung per Signalfernübertragung zu übermitteln. Hierdurch ist es beispielsweise möglich, das Alarmsignal an eine Überwachungsstation zu übertragen. Der Installationsaufwand der beim Errichten der Vorrichtung zur Überwachung der Feuchtigkeitssperre wird möglichst gering gehalten, wenn die Sendeeinheit bei einer Fortbildung der Erfindung eine Funksendeeinheit ist.

Die in Verbindung mit vorteilhaften Ausgestaltungen der Vorrichtung erläuterten Merkmale können bei dem Verfahren zum Überwachen einer Feuchtigkeitssperre in analoger Weise vorgesehen sein, wobei sich die erläuterten Vorteile entsprechend ergeben.

### Beschreibung von bevorzugten Ausfuhrungsbeispielen der Erfindung

Die Erfindung wird im Folgenden anhand von Ausführungsbeispielen unter Bezugnahme auf die Figuren einer Zeichnung näher erläutert. Hierbei zeigen:
- Fig. 1: eine schematische Darstellung einer Anordnung mit einer flächigen Feuchtigkeitssperre sowie einer Vorrichtung zum Überwachen der Dichtheit der flächigen Feuchtigkeitssperre;
- Fig. 2: eine Anordnung mit mehreren Datenloggern, die mittels jeweiliger Funkverbindung mit einer zentralen Auswerteeinheit verbunden sind;
- Fig. 3: eine schematische Darstellung einer flächigen Feuchtigkeitssperre am Beispiel eines Tanklagers für eine Tankstelle;
- Fig. 4: eine schematische Darstellung einer weiteren flächigen Feuchtigkeitssperre, bei der es sich um eine Abdichtung für eine Standfläche handelt; und
- Fig. 5: eine flächenhafte grafische Darstellung von Meßwerten für ein elektrisches Feld im Bereich einer Dichtwand.

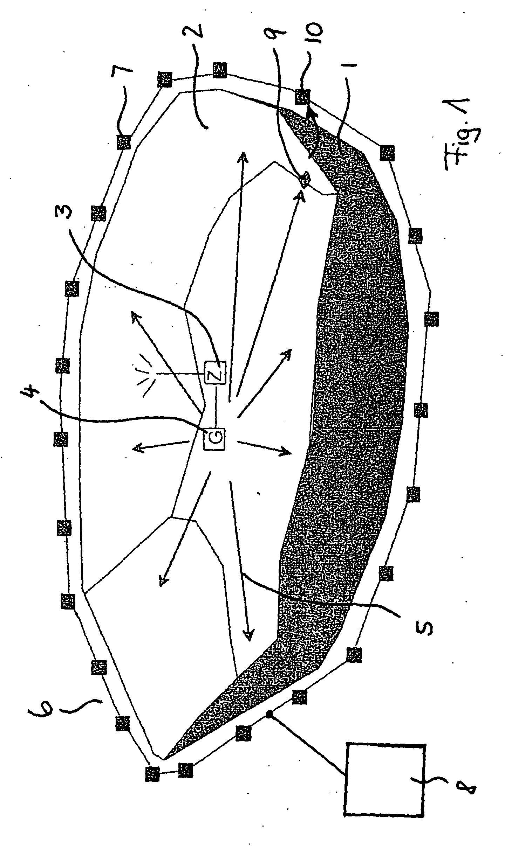

Fig. 1 zeigt eine schematische Darstellung einer Vorrichtung zur Überwachung einer flächigen Feuchtigkeitssperre 1. Die flächige Feuchtigkeitssperre 1 ist beispielsweise mit Hilfe einer Folienabdichtung oder einem anderen gegenüber einem Feuchtigkeitsangriff dichten Material gebildet. Im Innenraum 2 der flächigen Feuchtigkeitssperre 1 sind eine Einspeiseelektrode 3 und eine Gegenelektrode 4 angeordnet. Die so gebildete Elektrodenanordnung ist mit einer in Fig. 1 nicht dargestellten elektrischen Energiequelle verbunden, mit der dauerhaft oder in Form von Impulsen elektrische Signale erzeugt und über die Einspeiseelektrode 3 zur Ausbildung eines elektrischen Testfeldes 5, insbesondere eines stationären elektrostatischen Testfeldes, abgegeben werden. Bei der über die Einspeiseelektrode 3 eingespeisten elektrischen Kenngröße kann es sich um einen Strom oder eine Spannung handeln. Sowohl Gleichals auch Wechselstromgrößen können verwendet werden. Bei Verwendung von Wechselstromgrößen kann bei der Messung auch eine Phasenmessung als Meßgröße erfaßt werden.

Im Außenbereich 6 der flächigen Feuchtigkeitssperre 1 sind mehrere Sensoren 7 angeordnet, die ihrerseits an einer Auswerteeinheit 8 angekoppelt sind. Wenn nun in der flächigen Feuchtigkeitssperre 1 eine Fehlstelle in Form eines Lecks 9 auftritt, wird zumindest von einem der mehreren Sensor 10 eine Feldlinienänderung im Vergleich zu vorherigen Messungen erfaßt, bei deren Ausführung das Leck 9 noch nicht bestanden hat. Diese Änderung kann auch darin bestehen, daß vor Auftreten des Lecks 9 mit dem einen Sensor 10 kein Feldliniensignal erfaßt wurde, wohingegen nach dem Auftreten des Lecks 9 ein Signal registriert wird.

Die aktuellen Meßwerte für eine oder mehrere elektronischen Kenngrößen für Feldlinien werden von den Sensoren 7 an die Auswerteeinheit 8 übertragen. In der Auswerteeinheit 8 werden die aktuellen erfaßten Meßwerte mit vorher in der Auswerteeinheit 8 gespeicherten Normalwerten für die mittels der Sensoren 7 erfaßten Feldlinien verglichen. Da die mit dem Sensor 10 erfaßten Meßwerte von den Normalwerten in diesem Abschnitt des Außenbereichs 6, welche einen früheren Zustand ohne das Leck 9 charakterisieren, abweichen, wird mit Hilfe der Auswerteeinheit 8 ein Alarmsignal erzeugt, welches als optisches oder akustisches Signal ausgegeben werden kann oder an eine in Fig. 1 nicht dargestellt Meldeeinrichtung übermittelt werden kann. Diese Datenfernübertragung des Alarmsignals kann mittels Kabelverbindung oder kabellos per Funk erfolgen. In ähnlicher Weise kann die Übertragung der aktuellen Meßwerte von den Sensoren 7 an die Auswerteeinheit 8 über eine jeweilige Kabelverbindung oder eine kabellose Datenfernübertragung erfolgen.

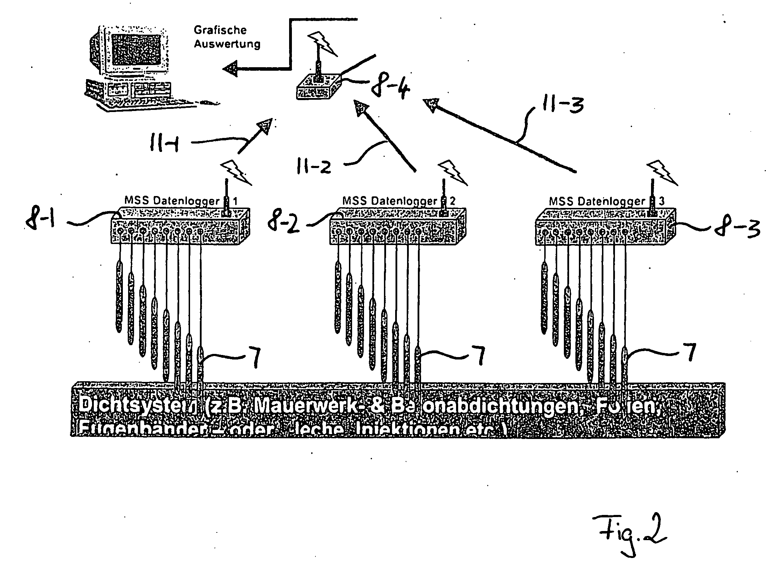

Fig. 2 zeigt eine schematische Darstellung einer Vorrichtung zur Überwachung einer flächigen Feuchtigkeitssperre in einer weiteren Ausführungsform. Für gleiche Merkmal sind in Fig. 2 die gleichen Bezugszeichen wie in Fig. 1 verwendet. Die Auswerteeinheit 8 ist bei der Ausführungsform nach Fig. 2 mit Hilfe von mehreren Datenloggern 8-1, 8-2, 8-3 sowie einer zentralen Meßwerterfassungseinheit 8-4 gebildet. Die mehreren Datenlogger 8-1 bis 8-3 sind über eine jeweilige Funkverbindung 11-1, 11-2, 11-3 mit der zentralen Meßwerterfassungseinheit 8-4 verbunden.

Im folgenden wird der Betrieb der Ausführungsform nach Fig. 2 näher erläutert. Nach Aktivierung der Datenlogger 8-1, 8-2, 8-3 (beispielsweise mittels eines Reed-Schalters) führt jeder Datenlogger 8-1, 8-2, 8-3 einen Selbsttest durch und meldet sich bei der zentralen Meßwerterfassungseinheit 8-4 an. Bei dieser Anmeldung werden die Anzahl der angeschlossenen Sensoren 7, deren einzelne Funktionstüchtigkeit sowie eine Anzahl weiterer Systemparameter wie zum Beispiel Temperatur und Luftfeuchtigkeit, der Zustand der Spannungsversorgung, etc. des Datenloggers übertragen. Im Zuge dieser Registrierung bei der zentralen Meßwerterfassungseinheit 8-4 wird jedem Datenlogger 8-1, 8-2, 8-3 eine eindeutig Identifikations-Nummer (ID-Nummer) zugewiesen. Jede weitere nachfolgende Kommunikation zwischen Datenlogger 8-1, 8-2, 8-3 und zentraler Meßwerterfassungseinheit 8-4 wird von dieser ID-Nummer begleitet und aufgezeichnet. Damit ist es möglich, praktisch beliebig viele Datenlogger 8-1, 8-2, 8-3 an der zentralen Meßwerterfassungseinheit 8-4 anzumelden (zu betreiben). Während dieser Initalisierungsprozedur wird ebenfalls die Stärke der Funkverbindungen 11-1, 11-2, 11-3 gemessen. Diese kann eventuell mittels Abstimmung der Antennen korrigiert werden.

Nachdem alle installierten Datenlogger 8-1, 8-2, 8-3 aktiviert wurden, beginnt gemäß der individuellen Systemkonfiguration eine sogenannte "Master-Slave-Kommunikation". Das heißt, daß alle Aktionen, zum Beispiel Meßintervalle oder Meßdauer, der Datenlogger 8-1, 8-2, 8-3 ("Slaves") ausschließlich von der zentralen Meßwerterfassungseinheit 8-4 ("Master") ausgelöst und gesteuert werden.

In einzelnen Fällen können, falls die Funkverbindung nicht hergestellt werden kann, zum Beispiel wegen sehr weiter räumlicher Trennung von "Slaves" und "Master" oder außerordentlich starker Abschirmung des Bauwerkes einzelne "Slaves" als Router konfiguriert werden. Diese speziellen "Slaves" arbeiten dann als so genannte Relaisstation und geben die empfangenen Datenpakete, die für andere Datenlogger 8-1, 8-2, 8-3 bestimmt sind (andere ID-Nummer), weiter. Ebenso leiten sie erhaltene Meßdatenpakete anderer Datenlogger 8-1, 8-2, 8-3 zur zentralen Meßwerterfassungseinheit 8-4 weiter. Mit Hilfe dieses Systems kann auch eine weit verzweigte Anordnung von Sensoren und zugehörigen Datenloggern mit theoretisch beliebiger Länge aufgebaut und betrieben werden. Da jeder Datenlogger 8-1, 8-2, 8-3 auch eine Routinefunktion erfüllen kann, ist der Größe des Systems, nämlich der Anzahl der Sensoren 7 praktisch keine Grenze gesetzt.

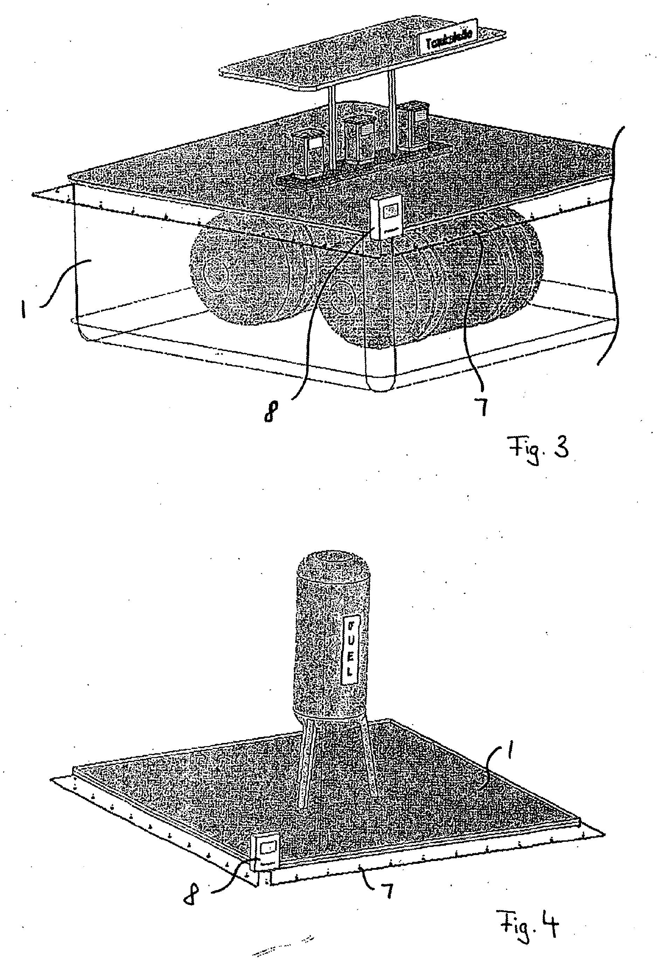

Die Fig. 3 und 4 zeigen schematische Darstellungen für weitere Ausführungsbeispiele der Vorrichtung zur Überwachung einer flächigen Feuchtigkeitssperre 1 in Verbindung mit einem Tanklager 30 beziehungsweise der Abdichtung einer Standfläche 40. Für gleiche Merkmale werden in den Fig. 3 und 4 die gleichen Bezugszeichen wie in Fig. 1 verwendet.

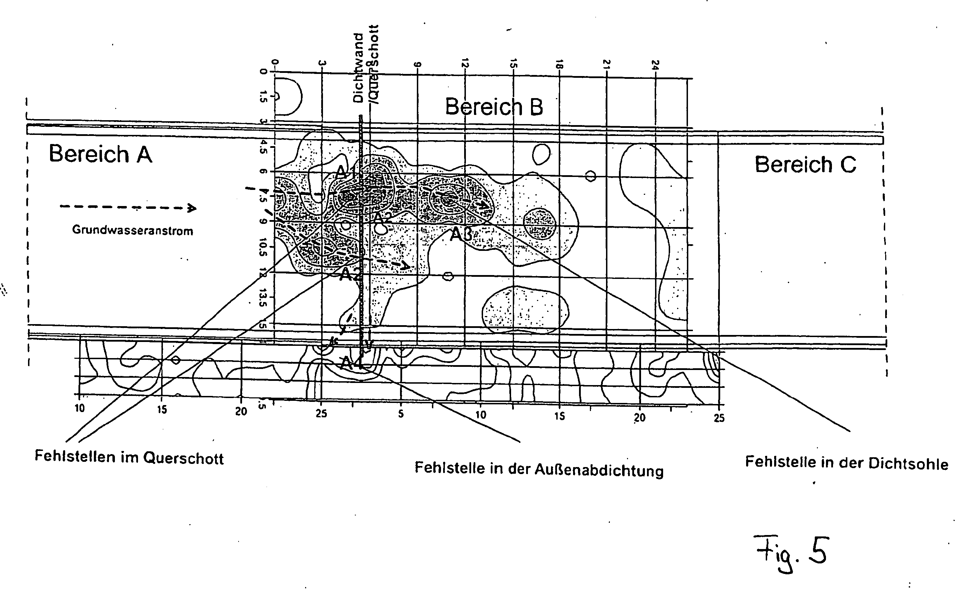

Fig. 5 zeigt eine flächenhafte grafische Darstellung von Meßwerten für Feldlinien eines elektrischen Feldes im Bereich einer Dichtwand. Es sind mehrere Fehlstellen erkennbar, die anhand von Feldlinienanomalien beziehungsweise -verdichtungen identifizierbar sind.

Die beschriebene Vorrichtung ist nutzbar zur Lokalisierung von Wegsamkeiten in Dichtwänden, Dichtsohlen und natürlichen Stauhorizonten.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Vorrichtung zum Überwachen einer Feuchtigkeitssperre (1), insbesondere einer linien-oder einer flächenhaften Feuchtigkeitssperre, mit einer im Umfeld der Feuchtigkeitssperre (1) gebildeten und mindestens eine Elektrode (3; 4) umfassenden Elektrodenanordnung zum Ausbilden eines elektrischen Testfeldes (5) im Umfeld der Feuchtigkeitssperre (1), wobei daß im Umfeld der Feuchtigkeitssperre eine ortsfeste Sensoranordnung mit mindestens einem Meßwerte mindestens einer elektrischen Kenngröße für Feldlinien eines im Umfeld der Feuchtigkeitssperre ausgebildeten, elektrischen Feldes erfassenden Sensor (7) angeordnet ist und daß der mindestens eine Sensor (7) der ortsfesten Sensoranordnung mit einer Auswerteeinrichtung (8) verbunden ist, in welcher Normalwerte der elektrischen Kenngröße für die Feldlinien gespeichert sind und die ausgebildet ist, um von dem mindestens einen Sensor (7) der ortsfesten Sensoranordnung empfangene, aktuelle Meßwerte der elektrischen Kenngröße für die Feldlinien mit den Normalwerten der elektrischen Kenngröße für die Feldlinien zu vergleichen und ein Alarmsignal zu erzeugen, wenn aufgrund einer Fehlstelle (9) in der Feuchtigkeitssperre (1) die aktuellen Meßwerte der elektrischen Kenngröße für die Feldlinien von den Normalwerten der elektrischen Kenngröße für die Feldlinien abweichen, **dadurch gekennzeichnet dass**, die mindestens eine Elektrode (3; 4) der Elektrodenanordnung und der mindestens eine Sensor (7) als integriertes Sensor-Elektroden-Element ausgeführt sind.

2. Vorrichtung nach Anspruch 1, **dadurch gekennzeichnet, daß** eine oder mehrere Einspeiseelektroden (3) auf einer Seite der Feuchtigkeitssperre (1) und eine oder mehrere Gegenelektroden (4) auf einer anderen Seite der Feuchtigkeitssperre (1) angeordnet sind.

3. Vorrichtung nach Anspruch 2, **dadurch gekennzeichnet, daß** eine oder alle Einspeiseelektroden (3) auf einer Feuchteangriffsseite der Feuchtigkeitssperre (1) angeordnet sind.

4. Vorrichtung nach einem der vorangehenden Ansprüche, **dadurch gekennzeichnet, daß** der mindestens eine Sensor (7) über eine kabellose Verbindung an die Auswerteeinheit (8) zur Datenfernübertragung der aktuellen Meßwerte der elektrischen Kenngröße für die Feldlinien gekoppelt ist.

5. Vorrichtung nach einem der vorangehenden Ansprüche, **dadurch gekennzeichnet, daß** die Auswerteeinheit (8) mit einer Aktualisierungsfunktion ausgebildet ist, um die Normalwerte der elektrischen Kenngröße für die Feldlinien in vorgegebenen Zeitabständen automatisch zu aktualisieren.

6. Vorrichtung nach einem der vorangehenden Ansprüche, **dadurch gekennzeichnet, daß** die mindestens eine Elektrode (3; 4) der Elektrodenanordnung und / oder der mindestens eine Sensor (7) linienhaft oder flächenhaft angeordnet sind.

7. Vorrichtung nach einem der vorangehenden Ansprüche, **dadurch gekennzeichnet, daß** der mindestens eine Sensor (7) und die Auswerteeinrichtung (8) zur Datenübertragung an ein Haustechniknetz angeschlossen sind.

8. Vorrichtung nach einem der vorangehenden Ansprüche, **dadurch gekennzeichnet, daß** die mindestens eine Elektrode (3; 4) der Elektrodenanordnung und / oder der mindestens eine Sensor (7) im Erdreich angeordnet sind.

9. Vorrichtung nach einem der vorangehenden Ansprüche, **dadurch gekennzeichnet, daß** die mindestens eine Elektrode (3; 4) der Elektrodenanordnung und / oder der mindestens eine Sensor (7)in einem Mauerwerk angeordnet sind.

10. Vorrichtung nach einem der Ansprüche 1 bis 9, **dadurch gekennzeichnet, daß** die mindestens eine Elektrode (3; 4) der Elektrodenanordnung und / oder der mindestens eine Sensor (7) im Grundwasser angeordnet sind.

11. Vorrichtung nach einem der Ansprüche 1 bis 9, **dadurch gekennzeichnet, daß** die mindestens eine Elektrode (3; 4) der Elektrodenanordnung und / oder der mindestens eine Sensor (7) im Bereich eines Beckens oder Behältnisses angeordnet sind.

12. Vorrichtung nach einem der vorangehenden Ansprüche, **dadurch gekennzeichnet, daß** die Auswerteeinrichtung (8) mit Hilfe eines oder mehrerer Datenlogger (8-1, 8-2, 8-3) ausgeführt ist, die jeweils mit dem mindestens einen Sensor (7) verbunden sind.

13. Vorrichtung nach einem der vorangehenden Ansprüche, **dadurch gekennzeichnet, daß** in der Auswerteeinheit (8) oder in einem oder allen Datenloggern (8-1, 8-2, 8-3) eine Betriebssoftware für eine automatische Datenerfassung installiert ist.

14. Vorrichtung nach Anspruch 13, **dadurch gekennzeichnet, daß** die Betriebssoftware ausgebildet ist, um unterschiedliche Meßaufgaben zu bewältigen, und hierbei benötigte Meßparameter frei bestimmbar sind, um unterschiedliche Meßanforderungen anzupassen.

15. Vorrichtung nach einem der vorangehenden Ansprüche, **dadurch gekennzeichnet, daß** in der Auswerteeinheit (8) und / oder in einem oder allen Datenloggern (8-1, 8-2, 8-3) eine Auswertesoftware installiert ist, um als Reaktion auf das Alarmsignale die Abgabe eines Warnsignals über eine elektronische Warneinrichtung zu veranlassen, wenn die aktuellen Meßwerte der elektrischen Kenngröße für die Feldlinien von den Normalwerten der elektrischen Kenngröße für die Feldlinien abweichen.

16. Vorrichtung nach Anspruch 15, **dadurch gekennzeichnet, daß** die elektronische Warneinrichtung ein Signallicht umfaßt.

17. Vorrichtung nach Anspruch 15 oder 16, **dadurch gekennzeichnet, daß** die elektronische Warneinrichtung einen Tonsignalgeber umfaßt.

18. Vorrichtung nach einem der Ansprüche 15 bis 17, **dadurch gekennzeichnet, daß** die elektronische Warneinrichtung ausgebildet ist, um an eine vorbestimmte Meldestelle eine elektronische Nachricht zu übermitteln.

19. Vorrichtung nach Anspruch 18, **dadurch gekennzeichnet, daß** die elektronische Warneinrichtung ausgebildet ist, um die elektronische Nachricht an eine örtliche Haustechnik, per SMS (SMS - "Short Message Service"), per e-mail, als Telefonnachricht oder dergleichen zu übermitteln.

20. Vorrichtung nach einem der vorangehenden Ansprüche, **dadurch gekennzeichnet, daß** die Auswerteeinheit (8) und / oder ein oder alle Datenlogger (8-1, 8-2, 8-3) ein temporäres oder permanentes Speichermedium umfassen.

21. Vorrichtung nach einem der vorangehenden Ansprüche, **dadurch gekennzeichnet, daß** die Betriebs- oder die Auswertesoftware ausgebildet sind, um zeitlich bestimmbare Auswerteergebnisse zu erzeugen, zu speichern und / oder an die vorbestimmte Meldestelle zu übertragen.

22. Vorrichtung nach einem der vorangehenden Ansprüche, **dadurch gekennzeichnet, daß** die Auswerteeinrichtung (8) eine Sendeeinheit aufweist, um das Alarmsignal an eine Meldeeinrichtung per Signalfernübertragung zu übermitteln.

23. Vorrichtung nach Anspruch 22, **dadurch gekennzeichnet, daß** die Sendeeinheit eine Funksendeeinheit ist.

24. Verfahren zum Überwachen einer Feuchtigkeitssperre (1), insbesondere einer linien- oder einer flächenhaften Feuchtigkeitssperre, mit einer im Umfeld der Feuchtigkeitssperre (1) gebildeten und mindestens eine Elektrode (3; 4) umfassenden Elektrodenanordnung zum Ausbilden eines elektrischen Testfeldes (5) im Umfeld der Feuchtigkeitssperre (1), wobei daß im Umfeld der Feuchtigkeitssperre eine ortsfeste Sensoranordnung mit mindestens einem Meßwerte mindestens einer elektrischen Kenngröße für Feldlinien eines im Umfeld der Feuchtigkeitssperre ausgebildeten, elektrischen Feldes erfassenden Sensor (7) angeordnet wird und daß der mindestens eine Sensor (7) der ortsfesten Sensoranordnung mit einer Auswerteeinrichtung (8) verbunden wird in welcher Normalwerte der elektrischen Kenngröße für die Feldlinien gespeichert sind und die ausgebildet ist, um von dem mindestens einen Sensor (7) der ortsfesten Sensoranordnung empfangene, aktuelle Meßwerte der elektrischen Kenngröße für die Feldlinien mit den Normalwerten der elektrischen Kenngröße für die Feldlinien zu vergleichen und ein Alarmsignal zu erzeugen, wenn aufgrund einer Fehlstelle (9) in der Feuchtigkeitssperre (1) die aktuellen Meßwerte der elektrischen Kenngröße für die Feldlinien von den Normalwerten der elektrischen Kenngröße für die Feldlinien abweichen, **dadurch gekennzeichnet dass**, die mindestens eine Elektrode (3; 4) der Elektrodenanordnung und der mindestens eine Sensor (7) als integriertes Sensor-Elektroden-Element ausgeführt sind.

## Claims

1. A device for monitoring a moisture barrier (1), in particular a linear or planar moisture barrier, having an electrode arrangement which is formed in the vicinity of the moisture barrier (1) and comprises at least one electrode (3; 4) for forming an electric test field (5) in the vicinity of the moisture barrier (1), wherein arranged in the vicinity of the moisture barrier is a stationary sensor arrangement with at least one sensor (7) which detects at least one measured value of at least one electrical parameter for field lines of an electric field formed in the vicinity of the moisture barrier, and in which the at least one sensor (7) of the stationary sensor arrangement is connected to an evaluation unit (8) in which normal values of the electrical parameter for the field lines are stored and which is designed to compare current measured values of the electrical parameter for the field lines, received from the at least one sensor (7) of the stationary sensor arrangement, with the normal values of the electrical parameter for the field lines and to generate an alarm signal if, due to a fault (9) in the moisture barrier (1), the current measured values of the electrical parameter for the field lines differ from the normal values of the electrical parameter for the field lines, **characterized in that** the at least one electrode (3; 4) of the electrode arrangement and the at least one sensor (7) are designed as an integrated sensor/electrode element.

2. The device according to claim 1, **characterized in that** one or more feed electrodes (3) are arranged on one side of the moisture barrier (1) and one or more counterelectrodes (4) are arranged on another side of the moisture barrier (1).

3. The device according to claim 2, **characterized in that** one or all feed electrodes (3) are arranged on a moisture attack side of the moisture barrier (1).

4. The device according to any one of the preceding claims, **characterized in that** the at least one sensor (7) is coupled via a wireless connection to the evaluation unit (8) for remote data transmission of the current measured values of the electrical parameter for the field lines.

5. The device according to any one of the preceding claims, **characterized in that** the evaluation unit (8) is designed with an update function for automatically updating the normal values of the electrical parameter for the field lines at predefined time intervals.

6. The device according to any one of the preceding claims, **characterized in that** the at least one electrode (3; 4) of the electrode arrangement and/or the at least one sensor (7) are arranged in a linear or planar manner.

7. The device according to any one of the preceding claims, **characterized in that** the at least one sensor (7) and the evaluation unit (8) are connected to a domestic network for data transmission.

8. The device according to any one of the preceding claims, **characterized in that** the at least one electrode (3; 4) of the electrode arrangement and/or the at least one sensor (7) are arranged in the soil.

9. The device according to any one of the preceding claims, **characterized in** the at least one electrode (3; 4) of the electrode arrangement and/or the at least one sensor (7) are arranged in brickwork.

10. The device according to any one of claims 1 to 9, **characterized in that** the at least one electrode (3; 4) of the electrode arrangement and/or the at least one sensor (7) are arranged in the groundwater.

11. The device according to any one of claims 1 to 9, **characterized in that** the at least one electrode (3; 4) of the electrode arrangement and/or the at least one sensor (7) are arranged in the region of a tank or container.

12. The device according to any one of the preceding claims, **characterized in that** the evaluation unit (8) is designed using one or more data loggers (8-1, 8-2, 8-3) which are in each case connected to the at least one sensor (7).

13. The device according to any one of the preceding claims, **characterized in that** operating software for automatic data acquisition is installed in the evaluation unit (8) or in one or all data loggers (8-1, 8-2, 8-3).

14. The device according to claim 13, **characterized in that** the operating software is designed to manage different measurement tasks and required measurement parameters can be freely determined in order to meet different measurement requirements.

15. The device according to any one of the preceding claims, **characterized in that** evaluation software is installed in the evaluation unit (8) and/or in one or all data loggers (8-1, 8-2, 8-3) for triggering, as a reaction to the alarm signal, the output of a warning signal via an electronic warning device when the current measured values of the electrical parameter for the field lines differ from the normal values of the electrical parameter for the field lines.

16. The device according to claim 15, **characterized in that** the electronic warning device comprises an indicator light.

17. The device according to claim 15 or 16, **characterized in that** the electronic warning device comprises an audio signal emitter.

18. The device according to any one of claims 15 to 17, **characterized in that** the electronic warning device is designed to transmit an electronic message to a predefined reporting station.

19. The device according to claim 18, **characterized in that** the electronic warning device is designed to transmit the electronic message to a local domestic network, via SMS (SMS - "Short Message Service"), via e-mail, as a telephone message or the like.

20. The device according to any one of the preceding claims, **characterized in that** the evaluation unit (8) and/or one or all data loggers (8-1, 8-2, 8-3) comprise a temporary or permanent storage medium.

21. The device according to any one of the preceding claims, **characterized in that** the operating software or the evaluation software are designed to generate temporally definable evaluation results, to store these and/or to transmit them to the predefined reporting station.

22. The device according to any one of the preceding claims, **characterized in that** the evaluation unit (8) has a transmitting unit for transmitting the alarm signal to a reporting unit via remote signal transmission.

23. The device according to claim 22, **characterized in that** the transmitting unit is a radio transmitter.

24. A method for monitoring a moisture barrier (1), in particular a linear or planar moisture barrier, having an electrode arrangement which is formed in the vicinity of the moisture barrier (1) and comprises at least one electrode (3; 4) for forming an electric test field (5) in the vicinity of the moisture barrier (1), wherein arranged in the vicinity of the moisture barrier is a stationary sensor arrangement with at least one sensor (7) which detects at least one measured value of at least one electrical parameter for field lines of an electric field formed in the vicinity of the moisture barrier, and in which the at least one sensor (7) of the stationary sensor arrangement is connected to an evaluation unit (8) in which normal values of the electrical parameter for the field lines are stored and which is designed to compare current measured values of the electrical parameter for the field lines, received from the at least one sensor (7) of the stationary sensor arrangement, with the normal values of the electrical parameter for the field lines and to generate an alarm signal if, due to a fault (9) in the moisture barrier (1), the current measured values of the electrical parameter for the field lines differ from the normal values of the electrical parameter for the field lines, **characterized in that** the at least one electrode (3; 4) of the electrode arrangement and the at least one sensor (7) are designed as an integrated sensor/electrode element.

## Revendications

1. Dispositif pour surveiller une barrière d'humidité (1), en particulier une barrière d'humidité linéaire ou plane, avec un arrangement d'électrodes formé à proximité de la barrière d'humidité (1), comprenant au moins une électrode (3 ; 4) et destiné à créer un champ électrique de test (5) à proximité de la barrière d'humidité (1), un arrangement de capteur fixe avec au moins un capteur (7) saisissant des valeurs de mesure d'au moins une grandeur électrique caractéristique de lignes de champ d'un champ électrique créé à proximité de la barrière d'humidité étant disposé à proximité de la barrière d'humidité et ledit au moins un capteur (7) de l'arrangement de capteur fixe étant relié à un dispositif d'évaluation (8) dans lequel des valeurs normales de la grandeur électrique caractéristique des lignes de champ sont mémorisées et qui est conçu pour comparer les valeurs de mesure actuelles de la grandeur électrique caractéristique des lignes de champ, reçues dudit au moins un capteur (7) de l'arrangement de capteur fixe, avec les valeurs normales de la grandeur électrique caractéristique des lignes de champ et pour générer un signal d'alarme quand, par suite d'un défaut (9) dans la barrière d'humidité (1), les valeurs de mesure actuelles de la grandeur électrique caractéristique des lignes de champ diffèrent des valeurs normales de la grandeur électrique caractéristique des lignes de champ, **caractérisé en ce que** ladite au moins une électrode (3 ; 4) de l'arrangement d'électrodes et ledit au moins un capteur (7) sont réalisés sous forme d'élément capteur-électrode intégré.

2. Dispositif selon la revendication 1, **caractérisé en ce qu'**une ou plusieurs électrodes d'alimentation (3) sont disposées d'un côté de la barrière d'humidité (1) et une ou plusieurs contre-électrodes (4) d'un autre côté de la barrière d'humidité (1).

3. Dispositif selon la revendication 2, **caractérisé en ce qu'**une ou toutes les électrodes d'alimentation (3) sont disposées d'un côté d'attaque de l'humidité de la barrière d'humidité (1).

4. Dispositif selon l'une des revendications précédentes, **caractérisé en ce que** ledit au moins un capteur (7) est couplé à l'unité d'évaluation (8) par l'intermédiaire d'une liaison sans fil pour la télétransmission de données des valeurs de mesure actuelles de la grandeur électrique caractéristique des lignes de champ.

5. Dispositif selon l'une des revendications précédentes, **caractérisé en ce que** l'unité d'évaluation (8) est conçue avec une fonction d'actualisation pour actualiser automatiquement, à intervalles de temps prédéfinis, les valeurs normales de la grandeur électrique caractéristique des lignes de champ.

6. Dispositif selon l'une des revendications précédentes, **caractérisé en ce que** ladite au moins une électrode (3 ; 4) de l'arrangement d'électrodes et/ou ledit au moins un capteur (7) sont disposés linéairement ou dans un plan.

7. Dispositif selon l'une des revendications précédentes, **caractérisé en ce que** ledit au moins un capteur (7) et le dispositif d'évaluation (8) sont connectés à un réseau domotique pour la transmission de données.

8. Dispositif selon l'une des revendications précédentes, **caractérisé en ce que** ladite au moins une électrode (3 ; 4) de l'arrangement d'électrodes et/ou ledit au moins un capteur (7) sont disposés dans la terre.

9. Dispositif selon l'une des revendications précédentes, **caractérisé en ce que** ladite au moins une électrode (3; 4) de l'arrangement d'électrodes et/ou ledit au moins un capteur (7) sont disposés dans une maçonnerie.

10. Dispositif selon l'une des revendications 1 à 9, **caractérisé en ce que** ladite au moins une électrode (3 ; 4) de l'arrangement d'électrodes et/ou ledit au moins un capteur (7) sont disposés dans la nappe phréatique.

11. Dispositif selon l'une des revendications 1 à 9, **caractérisé en ce que** ladite au moins une électrode (3 ; 4) de l'arrangement d'électrodes et/ou ledit au moins un capteur (7) sont disposés au niveau d'un bassin ou d'un réservoir.

12. Dispositif selon l'une des revendications précédentes, **caractérisé en ce que** le dispositif d'évaluation (8) est réalisé à l'aide d'un ou plusieurs enregistreurs de données (8-1, 8-2, 8-3) qui sont chacun reliés audit au moins un capteur (7).

13. Dispositif selon l'une des revendications précédentes, **caractérisé en ce qu'**un logiciel d'exploitation pour une saisie automatique de données est installé dans l'unité d'évaluation (8) ou dans un ou tous les enregistreurs de données (8-1, 8-2, 8-3).

14. Dispositif selon la revendication 13, **caractérisé en ce que** le logiciel d'exploitation est conçu pour maîtriser différentes tâches de mesure et qu'il est possible de déterminer librement des paramètres de mesure nécessaires à cet effet pour l'adapter à différentes exigences de mesure.

15. Dispositif selon l'une des revendications précédentes, **caractérisé en ce qu'**un logiciel d'évaluation est installé dans l'unité d'évaluation (8) et/ou dans un ou tous les enregistreurs de données (8-1, 8-2, 8-3) pour, en réaction au signal d'alarme, déclencher l'émission d'un signal d'avertissement par l'intermédiaire d'un dispositif électronique d'avertissement quand les valeurs de mesure actuelles de la grandeur électrique caractéristique des lignes de champ diffèrent des valeurs normales de la grandeur électrique caractéristique des lignes de champ.

16. Dispositif selon la revendication 15, **caractérisé en ce que** le dispositif électronique d'avertissement comprend une lumière de signalisation.

17. Dispositif selon la revendication 15 ou 16, **caractérisé en ce que** le dispositif électronique d'avertissement comprend un émetteur de signaux sonores.

18. Dispositif selon l'une des revendications 15 à 17, **caractérisé en ce que** le dispositif électronique d'avertissement est conçu pour transmettre un message électronique à un poste de signalisation prédéterminé.

19. Dispositif selon la revendication 18, **caractérisé en ce que** le dispositif électronique d'avertissement est conçu pour transmettre le message électronique à un système domotique local par SMS (SMS - «Short Message Service»), par e-mail, sous forme de message téléphonique ou analogues.

20. Dispositif selon l'une des revendications précédentes, **caractérisé en ce que** l'unité d'évaluation (8) et/ou un ou tous les enregistreurs de données (8-1, 8-2, 8-3) comprennent un support de mémorisation temporaire ou permanente.

21. Dispositif selon l'une des revendications précédentes, **caractérisé en ce que** le logiciel d'exploitation ou le logiciel d'évaluation sont conçus pour générer, mémoriser et/ou transmettre au poste de signalisation prédéterminé des résultats d'évaluation déterminables dans le temps.

22. Dispositif selon l'une des revendications précédentes, **caractérisé en ce que** le dispositif d'évaluation (8) présente une unité d'émission pour transmettre le signal d'alarme à un dispositif de signalisation par télétransmission de signaux.

23. Dispositif selon la revendication 22, **caractérisé en ce que** l'unité d'émission est une unité d'émission radio.

24. Procédé pour surveiller une barrière d'humidité (1), en particulier une barrière d'humidité linéaire ou plane, avec un arrangement d'électrodes formé à proximité de la barrière d'humidité (1), comprenant au moins une électrode (3 ; 4) et destiné à créer un champ électrique de test (5) à proximité de la barrière d'humidité (1), un arrangement de capteur fixe avec au moins un capteur (7) saisissant des valeurs de mesure d'au moins une grandeur électrique caractéristique de lignes de champ d'un champ électrique créé à proximité de la barrière d'humidité étant disposé à proximité de la barrière d'humidité et ledit au moins un capteur (7) de l'arrangement de capteur fixe étant relié à un dispositif d'évaluation (8) dans lequel des valeurs normales de la grandeur électrique caractéristique des lignes de champ sont mémorisées et qui est conçu pour comparer les valeurs de mesure actuelles de la grandeur électrique caractéristique des lignes de champ, reçues dudit au moins un capteur (7) de l'arrangement de capteur fixe, avec les valeurs normales de la grandeur électrique caractéristique des lignes de champ et pour générer un signal d'alarme quand, par suite d'un défaut (9) dans la barrière d'humidité (1), les valeurs de mesure actuelles de la grandeur électrique caractéristique des lignes de champ diffèrent des valeurs normales de la grandeur électrique caractéristique des lignes de champ, **caractérisé en ce que** ladite au moins une électrode (3 ; 4) de l'arrangement d'électrodes et ledit au moins un capteur (7) sont réalisés sous forme d'élément capteur-électrode intégré.
